(19) Europäisches Patentamt
European Patent Office
Office européen des brevets

(11) **EP 0 875 018 B1**

(12) **EUROPEAN PATENT SPECIFICATION**

(45) Date of publication and mention
of the grant of the patent:
**19.11.2003 Bulletin 2003/47**

(51) Int Cl.[7]: **G02B 26/10**, G01S 17/02

(86) International application number:
**PCT/RU97/00090**

(21) Application number: **97917494.3**

(22) Date of filing: **28.03.1997**

(87) International publication number:
**WO 98/021617 (22.05.1998 Gazette 1998/20)**

(54) **LASER SYSTEM FOR THE DETECTION OF OPTOELECTRONIC OBJECTS (OEO)**

LASERSYSTEM ZUR ENTDECKUNG OPTOELEKTRONISCHER GEGENSTAENDE

SYSTEME LASER PERMETTANT DE DETECTER DES OBJETS OPTOELECTRONIQUES

(84) Designated Contracting States:
**BE DE FR GB GR IT NL SE**

(30) Priority: **10.11.1996 RU 96121480**

(43) Date of publication of application:
**04.11.1998 Bulletin 1998/45**

(73) Proprietors:
• **Slipchenko, Nikolai Nikolaevich**
**Moscow, 103055 (RU)**
• **Mikhailenko, Sergei Anatolievich**
**Moskovskaya obl., 143000 (RU)**

(72) Inventors:
• **Slipchenko, Nikolai Nikolaevich**
**Moscow, 103055 (RU)**

• **Mikhailenko, Sergei Anatolievich**
**Moskovskaya obl., 143000 (RU)**

(74) Representative: **Andrae, Steffen, Dr. et al**
**Andrae Flach Haug**
**Balanstrasse 55**
**81541 München (DE)**

(56) References cited:
**EP-A- 0 227 999      EP-A- 0 553 698**
**US-A- 5 206 697      US-A- 5 371 581**
**US-A- 5 485 009**

• **PATENT ABSTRACTS OF JAPAN vol. 013, no. 135 (P-851), 5 April 1989 & JP 63 302314 A (MATSUSHITA ELECTRIC WORKS LTD), 9 December 1988,**

## Description

## BACGROUND OF THE INVENTION

### I. FIELD OF THE INVENTION

The present invention relates generally to instrument manufacture and can be used as a display unit for the detection of optoelectronic objects when ingressing within a visibility thereof.

### II. DESCRIPTION OF THE PRIOR ART

The closest prior art has been described in a laser marker PEQ-1 A ["James International Defense Review", 1996, No. 2, pp. 19-20] comprising a night sight (LVNVS), including a laser and a photosensitive detector (FD).

This instrument makes it possible that a target-oriented laser emission (more exactly, a laser spot on the target) be visible during the hours of darkness, which increases the probability of a successful target designation.

Major drawbacks associated with the prior art device reside in a limited field of vision; impossibility to operate under dynamic conditions of observation; restricted capabilities to operate during daylight (especially, solar) hours; the lack of independence of the design (from the point of view of detuning from electric power and cooling units); large mass-and-dimensional parameters.

## SUMMARY OF THE INVENTION

It is an object of the present invention to increase the efficiency of detecting optoelectronic objects, including under dynamic conditions of observation.

This object can be achieved in accordance with the present invention as set out in the claim and in particular by

replacing a prior art laser with electrical power and cooling units by a small-sized semiconductor frequency-pulsed laser (FPL) having a miniature storage battery (3 V) and a radiator;

replacing a prior art photosensitive device by a small-sized light guide having a sensitivity of up to $10^{-3}$ μA/lux;

locating said laser and photosensitive device (a light-emitting diode) on a rotary platform being hinged on the platform centre such that their optical axes are parallel to each other;

introducing additional components into the electrical circuit of said photosensitive device (FD), namely a threshold laser emission intensity device, an emission pulse counter, a sensor of an angular position of said FD and FPL, a unit for determining coordinates of an optoelectronic object (OEO) and an audible-signalling device, wherein, firstly, all these components are connected in series and, secondly, an output of said FPL being connected to an input of said FPL emission pulse counter, an output of said threshold laser emission intensity device being connected to an input of said FD, outputs of a rotating platform and a hinge being connected to an input of said FD and FPL angular position sensor.

## BRIEF DESCRIPTION OF THE DRAWINGS

Other advantages and features of the present invention will now be described in greater detail with reference to an exemplary embodiment, which is intended to explain and not to limit the invention, and is illustrated in the drawings in which:

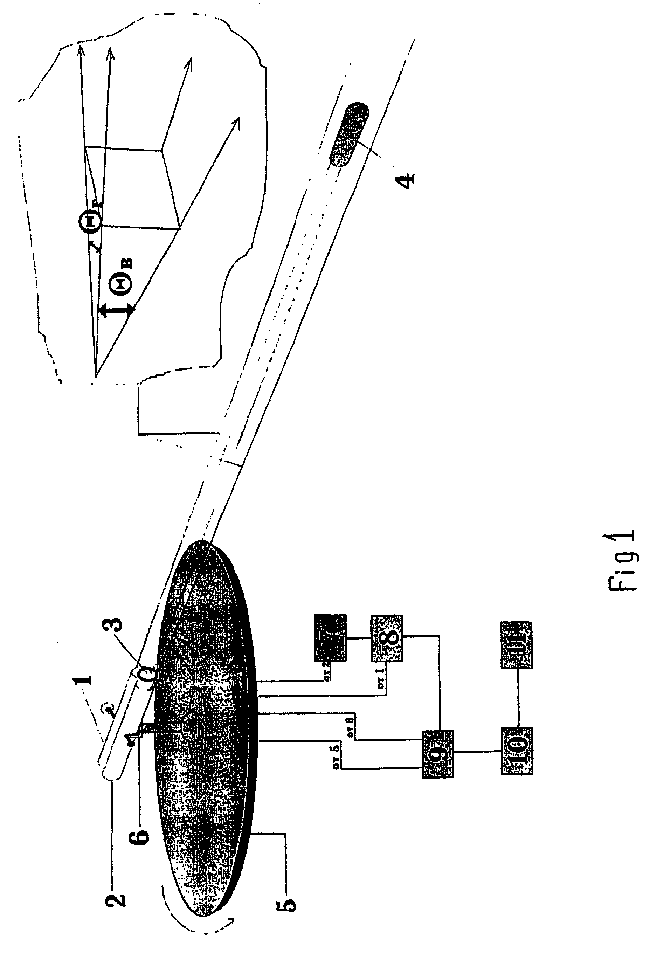

FIGURE **1** shows a preferred embodiment in accordance with the present invention.

## DETAILED DESCRIPTION OF THE PREFERRED EMBODIMENT

As shown in FIGURE **1**, the present invention comprises a frequency-pulsed laser (1 ) with an objective lens, a photodetector (2) with an objective lens, a narrow-band interference filter (3), an optoelectronic object (4), a platform (5) rotating about the vertical axis, a hinge (6) of vibration-rotational motion of said FPL and FD, a threshold laser emission intensity device (7), a FPL emission pulse counter (8), a FD and FPL angular position sensor (9), an OEO coordinate-determination unit (10), an audible-signaling device (11 ).

The present device operates as follows.

FPL emission pulses, through an objective lens, "look over" the space around an object to be protected at the expense of the beam scanning by the horizon from 0° to 360° during rotation of a platform (5) about the vertical axis, and by an azimuth angle during vibration-rotational motion of a hinge (6).

In so doing, an emission spot of this laser may be changed at the expense of the axial displacement of an objective lens.

When realizing relationships for angular speeds of rotation of the platform ($\omega_h$) and vibration-rotational motion in the vertical plane ($\omega_v$):

$$\omega_h = \theta_h \cdot \nu \qquad \text{and} \qquad \omega_v = (\theta_h \cdot \theta_v \cdot \nu)/2\pi,$$

wherein:

$\theta_h$, $\theta_v$ = divergence of the FPL emission in the horizontal and vertical plane, respectively;
$\nu$ = FPL pulse recurrence frequency;

an upper half-space is closely (without gaps) filled up around an object to be protected per time

$\pi^2 /\nu \cdot \theta_h \cdot \theta_v$, which amounts to (provided $\theta_h = 10^{-2}$

radian, $\theta_v = 10^{-1}$ radian, $\nu = 10^4$ Hz) approximately one second.

When the OEO finds itself in the upper half-space and the laser light is set to bear on an object to be protected (that is, the FPL objective lens is within the OEO visibility), the laser light of the FPL will flash, that is to say, be reflected in a strictly reverse direction.

In case where a distance between optical axes of the FPL and FD objective lenses is less than a cross-section radius of the incoming beam

$$\Delta \leq \lambda/D \cdot l + D/2,$$

wherein:

$\lambda$ = FPL emission wavelength;
D = an aperture of the optoelectronic object;
l = the distance between the FD and the OEO;

then a part of emission from the OEO will fall, through the objective lens and the interference filter, on the FD (2). To cut off all the false flashes from foreign light sources, the FD objective lens is provided with a narrow-band interference filter having a pass band which is equal to the spectrum line width of said FPL.

A light signal obtained is converted at the FD into electric one and applied to a threshold laser emission intensity device (7), where comparison of the electric signal value with that of the threshold signal (which is preset at a level of electric signals incoming from false targets) takes place. In case of excess of the electric signal above the threshold signal, said signal is applied to an emission pulse counter (8) and an angular position sensor (9), where, upon receipt of information on the number of the FPL pulses passed and of a signal from the angular position sensor, angular coordinates of the platform (5) and the hinge (6) are determined within a coordinate-determination unit (10) at the moment of arrival of a flashing signal.

Thus, angular coordinates of the optoelectronic object are determined followed by their displaying at a display unit. Upon determination of the OEO coordinates, the electric signal is applied to an audible-signaling device which produces an alarm signal to be used for the protection of the object concerned.

Although the present invention has been described with reference to the preferred embodiment, the invention is not limited to the details thereof, and various changes and modifications obvious to one skilled in the art to which the invention pertains are deemed to be within the scope of the invention as further defined in the appended claim.

## Claims

**1.** A laser system for detecting optoelectronic objects OEO comprising a frequency-pulsed laser FPL and a photodetector FD with objective lenses having parallel optical axes, **characterized in that**, in order to increase the efficiency of detecting OEO, an objective lens of said FD is provided with a narrow-band interference fitter having a pass band which is equal to the spectrum line width of said FPL, the electric circuit of said FD comprises in series connected a threshold laser emission intensity device, an emission pulse counter with an angular position sensor, a coordinate-determination unit and an audible-signalling device, an output of said FPL being connected to an input of said FPL emission pulse counter, an output of said threshold laser emission intensity device being connected to an input of said FD, outputs of a rotating platform and a hinge being connected to an input of said FD and FPL angular position sensor, wherein said FPL and FD are located on the platform rotating about the vertical axis to enable vibration-rotational motion in the vertical plane such that

$$\omega_h = \theta_h \cdot \nu, \qquad \omega_v = (\theta_h \cdot \theta_v \cdot \nu)/2\pi,$$

and a distance between optical axes of the FPL and FD objective lenses

$$\Delta \leq \lambda/D \cdot l + D/2,$$

wherein:

$\omega_h$ = an angular rotational speed of the platform about the vertical axis;
$\omega_v$ = an angular speed of vibration-rotational motion in the vertical plane;
$\theta_h, \theta_v$ = divergence of the FPL emission in the horizontal and vertical plane, respectively;
$\nu$ = FPL pulse recurrence frequency;
$\lambda$ = FPL emission wavelength;
D = an aperture of the optoelectronic object;
l = a distance from a FD entrance pupil to the optoelectronic object.

## Patentansprüche

**1.** Lasersystem zum Detektieren optoelektronischer Objekte OEO mit einem frequenzgepulsten Laser FPL und einem Photodetektor FD, die Objektivlinsen mit parallelen optischen Achsen aufweisen, **dadurch gekennzeichnet, daß**, um die Effizienz des Detektierens des OEO zu verbessern, eine Objektivlinse des FD mit einem Schmalbandinterferenzfilter mit einem Durchlaßbereich ausgestattet ist, der gleich der Spektrumlinienbreite des FPL ist, wobei die elektrische Schaltung des FD in Serienschaltung eine Laseremissionsintensitätsschwellwertvorrichtung, einen Emissionspulszähler mit einem Winkelstellungssensor, eine Koordinatenbestimmungseinheit und eine hörbare Signalgebevorrichtung umfaßt, wobei ein Ausgang des FPL an einen Eingang des FPL-Emissionspulszählers angeschlossen ist, ein Ausgang der Laseremissionsintensitätsschwellwertvorrichtung an einen Eingang des FD angeschlossen ist, und Ausgänge einer Drehplattform und eines Drehgelenks an einen Eingang des FD- und FPL-Winkelstellungssensors angeschlossen sind, wobei der FPL und der FD auf der Plattform angeordnet sind, die sich um die vertikale Achse dreht, um eine Vibrationsdrehbewegung in der vertikalen Ebene derart zu ermöglichen, daß

$$\omega_h = \theta_h \cdot \nu, \qquad \omega_v = (\theta_h \cdot \theta_v \cdot \nu)/2\pi,$$

gilt und ein Abstand zwischen den optischen Achsen der FPL und FD-Objektivlinse

$$\Delta \leq \lambda/D \cdot l + D/2$$

ist, wobei:

$\omega_h$ = eine Winkelgeschwindigkeit der Plattform um die vertikale Achse;

$\omega_v$ = eine Winkelgeschwindigkeit der Vibrationsdrehbewegung in der vertikalen Ebene;

$\theta_h$, $\theta_v$ = Divergenz der FPL-Emission in der Horizontal- bzw. Vertikalebene;

$\nu$ = FPL Pulswiederkehrfrequenz;
$\lambda$ = FPL-Emissionswellenlänge;
D = eine Apertur des optoelektronischen Objekts;
l = ein Abstand von einer FD-Eingangspupille zu dem optoelektronischen Objekt.

## Revendications

1. Système laser permettant de détecter des objets optoélectroniques OEO comprenant un laser à impulsions de fréquence FPL et un photodétecteur FD munis de lentilles de focalisation ayant des axes optiques parallèles, **caractérisé en ce que**, de façon à accroître l'efficacité de la détection d'objets OEO, une lentille de focalisation dudit photodétecteur FD est munie d'un filtre interférentiel à bandes étroites ayant une bande passante qui est égale à la largeur de la raie spectrale dudit laser FPL, le circuit électrique dudit photodétecteur FD comprend un dispositif d'intensité d'émission laser seuil, un compteur d'impulsions d'émission muni d'un détecteur de position angulaire, une unité de détermination des coordonnées et un dispositif de signalisation sonore connectés en série, une sortie dudit laser FPL étant connectée à une entrée dudit photodétecteur FD, des sorties d'une plate-forme rotative et d'un pivot étant connectées à une entrée dudit détecteur de position angulaire desdits photodétecteur FD et laser FPL, dans lequel lesdits photodétecteur FD et laser FPL sont situés sur la plate-forme tournant autour de l'axe vertical afin de permettre un mouvement vibratoire rotoïde dans le plan vertical, de telle façon que :

$$\omega_h = \theta_h.\nu \qquad et \qquad \omega_v = (\theta_h.\theta_v.\nu)/2\Pi,$$

et qu'une distance entre les axes optiques des lentilles de focalisation du laser FPL et du photodétecteur FD vérifie la relation suivante :

$$\Delta \leq \lambda/D \ . \ l + D/2,$$

où :

$\omega_h$ = vitesse angulaire de rotation de la plate-forme autour de l'axe vertical ;
$\omega_v$ = vitesse angulaire de mouvement vibratoire rotoïde dans le plan vertical ;
$\theta_h$, $\theta_v$ = divergence de l'émission du laser FPL dans le plan horizontal et le plan vertical, respectivement ;
$\nu$ = fréquence de récurrence de l'impulsion du laser FPL ;
$\lambda$ = longueur d'onde d'émission du laser FPL ;
D = ouverture de l'objet optoélectronique ;
l = distance entre une pupille d'entrée du photodétecteur FD et l'objet optoélectronique.

Fig 1

EP 0 875 018 B1